(19) Europäisches Patentamt
European Patent Office
Office européen des brevets

(11) **EP 3 369 166 B1**

(12) **FASCICULE DE BREVET EUROPEEN**

(45) Date de publication et mention
de la délivrance du brevet:
**16.06.2021 Bulletin 2021/24**

(21) Numéro de dépôt: **16784150.1**

(22) Date de dépôt: **11.10.2016**

(51) Int Cl.:
**H02M 7/48** (2007.01)     **H02M 1/34** (2007.01)

(86) Numéro de dépôt international:
**PCT/EP2016/074357**

(87) Numéro de publication internationale:
**WO 2017/071947 (04.05.2017 Gazette 2017/18)**

(54) **SYSTÈME DE CONVERSION D'UNE PUISSANCE ÉLECTRIQUE CONTINUE EN PUISSANCE ÉLECTRIQUE ALTERNATIVE AVEC MODULE RÉCUPÉRATEUR D'ÉNERGIE**

SYSTEM ZUR UMWANDLUNG VON GLEICHSTROM IN WECHSELSTROM MIT EINEM ENERGIERÜCKGEWINNUNGSMODUL

SYSTEM FOR CONVERTING A DC ELECTRIC POWER INTO AN AC ELECTRIC POWER WITH AN ENERGY RECOVERY MODULE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.10.2015 FR 1560351**

(43) Date de publication de la demande:
**05.09.2018 Bulletin 2018/36**

(73) Titulaire: **Mavel EDT S.p.A.**
**11026 Pont-Saint-Martin (AO) (IT)**

(72) Inventeurs:
• **DIB, Wissam**
**92150 Suresnes (FR)**
• **BETTONI, Davide**
**10010 Settimo Vittone TO (IT)**
• **CHIONO, Denny**
**11010 Saint Nicolas (AO) (IT)**

(74) Mandataire: **Leoncini, Alberto et al**
**A.Bre.Mar. s.r.l.**
**Consulenza in Proprietà Industriale**
**Via Servais, 27**
**10146 Torino (IT)**

(56) Documents cités:
• **JONATHAN DOMINI SPERB ET AL: "Regenerative Undeland Snubber Using a ZVS PWM DC DC Auxiliary Converter Applied to Three-Phase Voltage-Fed Inverters", IEEE TRANSACTIONS ON INDUSTRIAL ELECTRONICS, IEEE SERVICE CENTER, PISCATAWAY, NJ, USA, vol. 58, no. 8, 1 août 2011 (2011-08-01), pages 3298-3307, XP011370069, ISSN: 0278-0046, DOI: 10.1109/TIE.2010.2089947**
• **TAUFIQ J A: "Advanced inverter drives for traction", 19930101, 1 janvier 1993 (1993-01-01), pages 224-228, XP006511671,**

## Description

La présente invention concerne le domaine des convertisseurs pour la conversion de l'énergie électrique, notamment pour les machines électriques à haute vitesse et/ou à vitesse variable.

Un convertisseur statique est un système permettant de convertir un signal électrique en un autre signal électrique possédant des caractéristiques différentes. Par exemple, un convertisseur peut permettre de convertir une tension alternative en une autre tension alternative avec une fréquence et/ou une amplitude différente, on parle alors de convertisseur alternatif/alternatif ou AC/AC. Selon un autre exemple, un convertisseur peut permettre de convertir une tension alternative en une tension continue, on parle alors de convertisseur alternatif/continu ou AC/DC. Pour la conversion inverse continu/alternatif, on parle de convertisseur DC/AC. Selon un dernier exemple, un convertisseur peut convertir une tension continue en une tension continue de tension différente, on parle alors de convertisseur DC/DC. Les convertisseurs peuvent être réversibles ou non réversibles. Généralement, la conversion est mise en œuvre au moyen de commutateurs (interrupteurs) commandés.

Pour piloter des machines électriques, notamment des machines électriques à aimants permanents, à partir de système(s) de stockage d'énergie électrique (par exemple une batterie), il est nécessaire de convertir l'énergie électrique continue en énergie alternative triphasée. Cette conversion peut être réalisée au moyen d'un convertisseur DC/AC. Un tel convertisseur doit fournir trois tensions sinusoïdales déphasées de 120° électriques les unes par rapport aux autres, dont l'amplitude dépend directement du couple demandé (mais aussi du régime de rotation), et dont la fréquence dépend uniquement du régime de rotation de la machine électrique reliée au convertisseur.

Classiquement, un convertisseur DC/AC comprend trois bras de commutations. Chaque bras de commutation comporte deux commutateurs commandés et deux diodes. En fonction du courant de charge demandé, un bras peut être composé de plusieurs 'sous bras' en parallèle. Les phases de la machine électrique sont reliées au point milieu de chaque bras. On commande chaque bras séparément en pilotant l'ouverture et la fermeture des commutateurs sur des périodes de découpage, de manière à former un signal triphasé. De manière non limitative, le convertisseur DC/AC peut comporter deux sondes de courant pour mesurer le courant dans deux phases. De plus, le convertisseur DC/AC peut comporter deux sondes de tension isolées pour mesurer les tensions composées entre les trois phases.

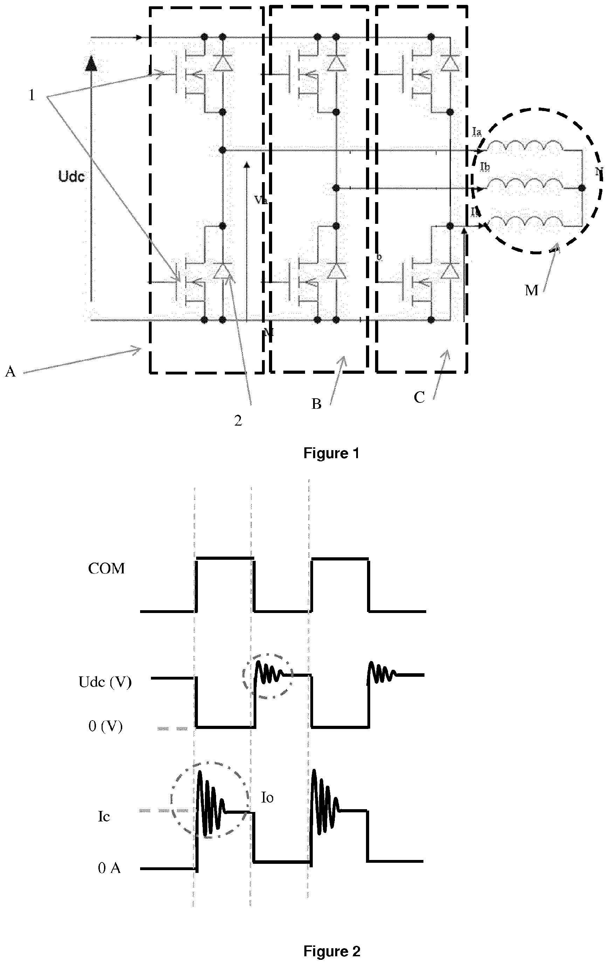

La figure 1 illustre un tel convertisseur classique DC/AC. La tension continue du moyen de stockage d'énergie électrique est indiquée Udc. Le moteur triphasé M est représenté schématiquement par trois bobines, alimentées par les courants Ia, Ib et Ic. Le convertisseur comporte trois bras de commutation A, B, C, chaque bras de commutation A, B, C est relié à une phase de la machine électrique M. Chaque bras de commutation comporte deux commutateurs 1 et deux diodes 2. Les bras de commutation A, B, C sont disposés en parallèle, entre les deux phases d'entrée continues du convertisseur de tension Udc. Les phases de sortie des bras de commutation A, B, C sont reliées au point milieu (entre les deux commutateurs) des bras de commutation.

La figure 2 représente le signal de commande COM des interrupteurs avec un rapport cyclique constant de 50%, la tension Udc et le courant Ic aux bornes d'un commutateur, pour un convertisseur DC/AC classique (tel que décrit ci-dessus en référence à la figure 1). Pour le signal de commande COM, la partie basse du créneau correspond au commutateur ouvert, et la partie haute du créneau correspond au commutateur fermé. On parle pour ce cas de commutation dite dure ou 'tout ou rien' (de l'anglais « hard switching »). On remarque que pour cette conception du convertisseur, des dépassements de tension Udc et de courant Io apparaissent. Io correspond à la valeur permanente de Ic. Io correspond au courant envoyé au moteur.

Ainsi, les principaux inconvénients de cette conception classique du convertisseur sont les suivants :

- pertes par commutation : cette conception présente des pertes par commutation importantes, ce qui tend à rendre son utilisation incompatible à des fréquences de commutation élevées et donc pour des machines électriques utilisées à très hautes vitesses,
- dépassement de courant/tension : comme présenté sur la figure 2, cette stratégie présente des dépassements de tension (de l'anglais « overshoot ») et de courant lors de la commutation instantanée de l'interrupteur. Ainsi ce type de pilotage nécessite une prise de marge sur la tension et le courant des différents composants lors de la conception du convertisseur (appelé aussi onduleur). Cela implique un surdimensionnement des composants utilisés, (par exemple : pour une tension de bus continu de 300 Volt, on utilise un commutateur IGBT avec une tension nominale de 600 Volt), et
- émissions électromagnétique importantes (CEM).

En partant des inconvénients de la stratégie « Hard switching » (pertes, incompatible avec les moteurs à hautes vitesses), une conception dite commutation douce (ou de l'anglais « Soft switching ») a été développée. Ainsi, pour limiter les dépassements du courant et de la tension sur les commutateurs, une bobine et un condensateur sont ajoutés sur le circuit précédent. La bobine module la variation du courant di/dt (« Turn-On »), et le condensateur module la variation de la tension dv/dt (« Turn-Off »). De plus, et dans le but d'assurer le fonctionnement du circuit, et donc un bilan énergétique nul, une résistance est rajoutée dans le circuit entre la tension de la source d'énergie utilisée et le circuit capacitif. Cette résistance permet d'assurer le fonctionnement de ce circuit et de rebaisser la tension au borne du circuit capacitif. Une telle conception de convertisseur DC/AC est décrite notamment dans la demande de brevet WO 11016854. Le document "Regenerative Undeland Snubber Using a ZVS PWM DC DC Auxiliary Converter Applied to Three-Phase Voltage-Fed Inverters", IEEE TRANSACTIONS ON INDUSTRIAL ELECTRONICS, IEEE SERVICE CENTER, PISCATAWAY, NJ, USA, vol. 58, no. 8, 1 août 2011 (2011-08-01), pages 3298-3307, XP011370069, ISSN: 0278-0046, décrit un système de conversion de puissance électrique continue en puissance électrique alternative triphasée comprenant trois bras de commutation et comprenant un module de récupérateur d'énergie électrique relié auxdits bras de commutation et au circuit de modulation. Le document "Advanced inverter drives for traction", 19930101, 1 janvier 1993 (1993-01-01), pages 224-228, XP006511671, décrit un système de conversion de puissance électrique continue en puissance électrique comprenant un module de récupérateur d'énergie électrique. Le circuit récupérateur d'énergie comportant une résistance.

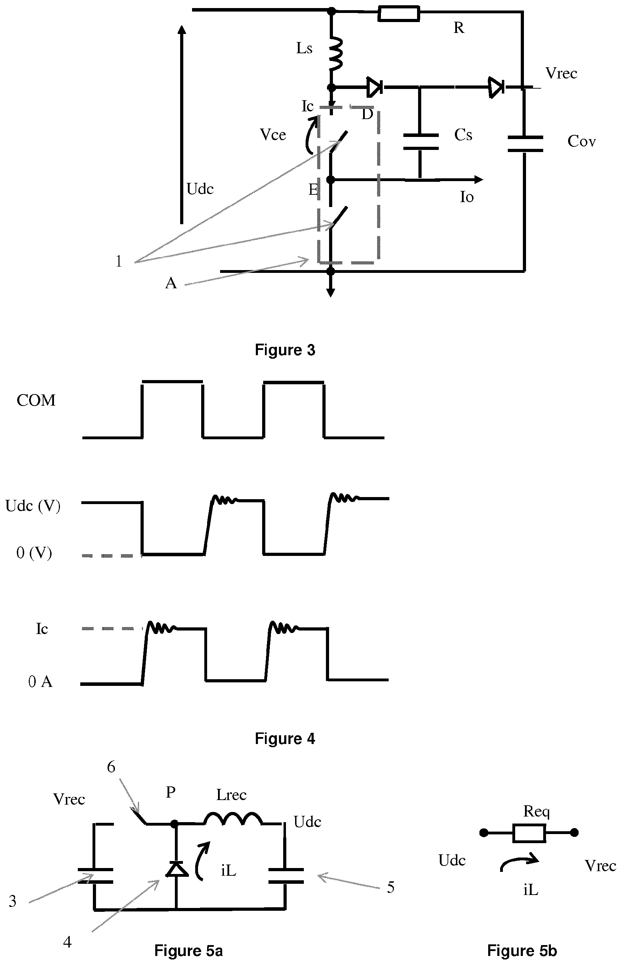

La figure 3 représente un schéma simplifié d'un bras de commutation (avec deux commutateurs 1) avec une capacité Cs, une bobine Ls, une résistance R et une capacité Cov pour une commutation douce. Ce circuit est connu par l'appellation anglaise « Undeland Snubber »). La tension Udc correspond à la tension aux bornes du moyen de stockage de l'énergie électrique continue. La bobine Ls est placée entre une phase d'entrée continue Udc et le bras de commutation A. Une branche part de la jonction entre la bobine Ls et le bras de commutation A, cette branche comporte deux diodes D, et arrive en une jonction entre la résistance R et le condensateur Cov. L'autre extrémité de la résistance R est connectée à la phase d'entrée continue du convertisseur. L'autre extrémité du condensateur Cs est connectée à la phase de sortie alternative du bras de commutation A. L'autre extrémité de la capacité Cov est connectée à la masse. La capacité Cs permet de moduler l'évolution de la tension au borne du commutateur. Cette capacité stocke une part de l'énergie due à la commutation douce des interrupteurs. L'autre partie de cette énergie est stockée dans une capacité d'une valeur plus élevée Cov. Ensuite, l'énergie stockée dans le circuit capacité est renvoyée au système de stockage utilisé (batterie) à travers la résistance. La bobine Ls permet de moduler l'évolution du courant au borne du commutateur. En fait, l'énergie créée par la bobine Ls n'est pas en entièrement stockée dans la capacité Cs, d'où la nécessité d'une deuxième capacité Cov d'une valeur plus élevée que Cs. La résistance assure le fonctionnement du système et permet de rebaisser la tension Vrec.

La figure 4 présente, de manière similaire à la figure 2, le signal de commutation COM, l'évolution de la tension Udc et du courant Ic du commutateur lors d'une commutation dite « soft ». Pour le signal de commande COM, la partie basse du créneau correspond au commutateur ouvert, et la partie haute du créneau correspond au commutateur fermé. On remarque sur cette figure, que les dépassements de tension Udc et de courant Ic sont diminués par rapport à la commutation dite « hard ».

Les avantages de la commutation douce sont :

- moins de pertes par commutation, cette conception du convertisseur est compatible avec des fréquences de commutation élevées, ainsi, cette conception peut être utilisée pour piloter des machines électriques à hautes vitesses,
- peu de dépassement de tension et du courant sur le commutateur, donc plus besoin de surdimensionner les composants, et
- l'évolution de la tension et du courant aux bornes des commutateurs lors de la transition est modulée par le choix de Ls et Cs respectivement.

Cependant, cette conception du convertisseur présente un inconvénient majeur, qui est la nécessité de dissiper une énergie dans la résistance, dont l'objectif est de rendre le bilan énergétique des éléments passifs nul et donc de rebaisser la tension Vrec, ce qui implique des pertes énergétiques, et par conséquent une diminution de l'efficacité du convertisseur.

Pour pallier ces inconvénients, la présente invention concerne un convertisseur DC/AC, comprenant un circuit de modulation des variations de tension et d'intensité (pour réalisation une commutation douce) et un module récupérateur d'énergie électrique. Le circuit de modulation des variations de tension et d'intensité permet de réduire les pertes et de limiter les dépassements de tension et du courant sur le commutateur. Le module récupérateur d'énergie électrique permet de remplacer la résistance du circuit de modulation, afin de réduire les pertes énergétiques.

**Le système selon l'invention**

L'invention concerne un système de conversion d'une puissance électrique continue en puissance électrique alternative triphasée comprenant trois bras de commutation, un circuit de modulation des variations de tension et d'intensité comprenant un condensateur par phase de sortie alternative dudit système de conversion et une bobine. Ledit système de conversion comprend un module récupérateur d'énergie électrique relié auxdits bras de commutation et audit circuit de modulation La présente invention est définie par les caractéristiques de la revendication 1.

Selon un mode de réalisation, ledit circuit de modulation comporte une bobine disposée entre une phase d'entrée continue dudit système de conversion et une jonction desdits bras de commutation.

De manière avantageuse, chaque condensateur dudit circuit de modulation est relié à une phase de sortie alternative dudit système de conversion et à la jonction entre ladite bobine dudit circuit de modulation et lesdits bras de commutation, et un condensateur.

Selon un aspect de l'invention, ledit module récupérateur d'énergie électrique est disposé entre une phase d'entrée continue dudit système de conversion et la jonction entre ledit bras de commutation et ledit condensateur dudit circuit de modulation.

Conformément à une caractéristique, le point du module récupérateur relié à ladite phase d'entrée continue dudit système de conversion est le point de ladite troisième branche dudit module récupérateur entre ladite inductance la masse, et le point du module récupérateur relié à ladite jonction entre ledit bras de commutation et ledit condensateur dudit circuit de modulation est le point de ladite première branche dudit module récupérateur entre ledit commutateur et ledit premier condensateur.

Selon une variante de réalisation, chaque bras de commutation comporte deux commutateurs et deux diodes, les phases de sortie dudit système de conversion sont reliées au milieu de chaque bras de commutation.

De manière préférentiel, lesdits commutateurs sont des commutateurs MOFSET et/ou IGBT.

Conformément à une conception de l'invention, ledit système de conversion comporte au moins deux sondes de courant.

De plus, ledit système de conversion peut comporter au moins deux sondes de tension.

Avantageusement, ledit système de conversion est bidirectionnel.

En outre, l'invention concerne un système moteur comprenant au moins un moyen de stockage d'énergie électrique et une machine électrique triphasée. Le système moteur comporte un système de conversion selon l'une des caractéristiques précédentes, pour convertir l'énergie électrique continue dudit moyen de stockage de l'énergie électrique en énergie électrique alternative triphasée pour ladite machine électrique.

## Présentation succincte des figures

D'autres caractéristiques et avantages du système selon l'invention, apparaîtront à la lecture de la description ci-après d'exemples non limitatifs de réalisations, en se référant aux figures annexées et décrites ci-après.

La figure 1, déjà décrite, illustre un convertisseur DC/AC classique, avec commutation dure, selon l'art antérieur.
La figure 2, déjà décrite, illustre le signal de commutation, la tension et l'intensité dans une phase pour un convertisseur DC/AC selon la conception de la figure 1.
La figure 3, déjà décrite, illustre un convertisseur DC/AC selon l'art antérieur, avec commutation douce.
La figure 4, déjà décrite, illustre le signal de commutation, la tension et l'intensité dans une phase pour un convertisseur DC/AC selon la conception de la figure 3.
La figure 5a illustre un mode de réalisation du module récupérateur d'énergie électrique pour un convertisseur selon l'invention.
La figure 5b illustre un modèle équivalent résistif au module récupérateur d'énergie électrique de la figure 5a.

## Description détaillée de l'invention

La présente invention concerne un système de conversion (convertisseur) DC/AC permettant de convertir une énergie électrique continue en énergie électrique alternative triphasée. Avantageusement, le système de conversion selon l'invention, peut être bidirectionnel (réversible). Ainsi, au moyen du système de conversion selon l'invention, une énergie alternative triphasée peut être convertie en énergie électrique continue.

Classiquement, le système de conversion selon l'invention, comporte trois bras de commutation, une phase d'entrée continue, et trois phases de sorties alternatives. La conception des trois bras de commutation peut être similaire à celle des convertisseurs DC/AC selon l'art antérieur, par exemple cette conception peut être conforme à la conception de la figure 1. Ainsi, chaque bras de convertisseur peut comprendre deux commutateurs (interrupteurs) commandés et deux diodes. Les diodes sont placées en parallèle des commutateurs, et permettent le passage du courant dans un seul sens. De manière connue, la commande des commutateurs permet de générer une tension alternative. Les phases de sortie alternatives du système de conversion sont reliées au point milieu de chaque bras de commutation, c'est-à-dire entre les deux commutateurs.

Conformément à une caractéristique de l'invention, les commutateurs peuvent être des commutateurs de type MOSFET (acronyme anglais de « Metal Oxide Semiconductor Field Effect Transistor » qui se traduit par transistor à effet de champ à structure métal-oxyde-semi-conducteur) et/ou IGBT (transistor bipolaire à grille isolée de l'anglais « Insulated Gate Bipolar Transistor »).

De préférence, les commutateurs sont commandés par une méthode de modulation de largeur d'impulsion (MLI ou en anglais PWM pour « Pulse Width Modulation »). Le principe général de cette méthode de modulation est qu'en appliquant une succession d'états discrets pendant des durées bien choisies, on peut obtenir en moyenne sur une certaine durée n'importe quelle valeur intermédiaire.

Selon l'invention, le système de conversion comporte en outre un circuit de modulation de tension et d'intensité. Le circuit de modulation de tension et d'intensité permet une commutation douce (« soft switching »), ce qui permet de limiter les pertes par commutation, de limiter les dépassements de tension et de courant sur les commutateurs. Le circuit de modulation comporte une bobine, qui module la variation de courant, et un condensateur par phase, pour moduler la variation de tension.

Selon un mode de réalisation de l'invention, le circuit de modulation comporte une bobine qui relie une phase d'entrée continue du système de commutation et les bras de commutation. De plus, le circuit de commutation comporte un condensateur par phase (donc trois condensateurs, un pour chacun des trois bras de commutation) qui relie la phase de sortie alternative et la jonction entre la bobine du circuit de modulation et les bras de modulation. Selon un exemple de réalisation, la conception du circuit de modulation du système convertisseur selon l'invention peut correspondre à la conception de la commutation souple illustrée en figure 3 sans la résistance R. De plus, pour réaliser les trois bras du système de conversion, ce schéma peut être répété trois fois (une fois pour chaque bras de commutation). En outre, les connexions vers le système de stockage d'énergie et vers la machine électrique peuvent être similaires aux connexions du convertisseur classique illustré à la figure 1.

Selon l'invention, le système de conversion comporte en outre un module récupérateur d'énergie électrique. Ainsi, le système de conversion ne comporte pas de résistance, dans laquelle de l'énergie est dissipée pour l'art antérieur. Au contraire, le module récupérateur d'énergie électrique, qui remplace la résistance, permet de récupérer l'énergie disponible ou créée lors de la commutation dite douce, en récupérant l'énergie disponible lors de la commutation douce et en l'envoyant vers des moyens de stockage d'énergie électrique (par exemple une batterie), connectés aux phases continues du système de conversion. Ainsi, les pertes électriques sont fortement réduites. Le module récupérateur d'énergie électrique est relié au bras de commutation et au circuit de modulation.

Selon une conception possible, le module récupérateur d'énergie électrique peut comprendre au moins une inductance, au moins une diode, au moins un condensateur et au moins un commutateur. Le commutateur est commandé de manière à autoriser la récupération d'énergie et son transfert vers les moyens de stockage d'énergie électrique.

Selon une variante de réalisation de l'invention, le module récupérateur d'énergie électrique peut comporter trois branches reliées en un point de jonction avec :

- une première branche comportant un commutateur,
- une deuxième branche comportant une diode, et
- une troisième branche comportant une inductance.

Ainsi, la carte du circuit imprimé du système de conversion peut être modifiée de manière spécifique pour utiliser la conception d'un convertisseur de commutation souple compatible avec des fréquences de commutation élevées, tout en minimisant les pertes dues au circuit passif rajouté pour assurer le fonctionnement du circuit de modulation.

La figure 5a représente, de manière schématique et non limitative, un tel module récupérateur d'énergie électrique. Le module récupérateur d'énergie électrique comporte trois branches reliées en un point de jonction P, avec :

- une première branche avec un commutateur 6,
- une deuxième branche comportant une diode 4 (dans laquelle circule un courant iL en fonction de la tension à ses bornes), et
- une troisième branche comportant une inductance Lrec.

Sur la figure 5a, le condensateur 5 représente la capacité des moyens de stockage d'énergie électrique (batterie) et n'est pas un composant du module récupérateur. Le condensateur 5 est placé entre l'inductance Lrec et la masse.

De plus, le condensateur 3 représente la capacité Crec, et c'est un composant du module récupérateur. Le condensateur 3 est placé entre le commutateur et la masse.

La diode 4 est placée entre le point de jonction des trois branches et la masse.

En pilotant le commutateur (son rapport cyclique), on peut piloter le courant iL qui circule entre Vrec et Udc (le courant envoyé à la batterie).

Ainsi en considérant l'ensemble formé par le module récupérateur et le condensateur des moyens de stockage d'énergie électrique, l'ensemble est formé de trois branches parallèles, placées entre le point P et la masse, avec :

- une première branche comportant le commutateur 6 et le condensateur 3,
- une deuxième branche comportant une diode 4, et

- une troisième branche comportant l'inductance Lrec et la capacité 5 des moyens de stockage de l'énergie électrique.

Quand le commutateur est fermé, la diode est dans un mode bloquée et le courant iL qui circule dans la bobine Lrec (représenté dans la figure 5a) est égal à $\frac{V_{rec}-U_{dc}}{L_{rec}}$

Quand le commutateur est ouvert, la diode est un mode passant est le courant iL qui circule dans la bobine Lrec (représenté dans la figure 5a) est égal à $\frac{-U_{dc}}{L_{rec}}$.

Ainsi en pilotant la temps d'ouverture et de fermeture du commutateur on peut piloter la valeur moyenne du courant iL, et avoir un fonctionnement équivalent d'un circuit résistif.

La figure 5b représente, de manière non limitative, un schéma électrique équivalent du module récupérateur d'énergie électrique illustré à la figure 5a. Ainsi, le module récupérateur d'énergie électrique est équivalent à une résistance équivalente Req, dans laquelle circule un courant iL, mais sans dissipation de l'énergie électrique.

Pour cette variante de réalisation, le courant moyen dans ce circuit peut être exprimé sous la forme suivante :

$$\bar{i} \cong \frac{V_{rec} - U_{dc}}{L_{rec}}\frac{T}{2} = \frac{V_{rec} - U_{dc}}{2 * L_{rec} * Fsw} \cong \frac{V_{rec} - U_{dc}}{Req}$$

avec :

- T la période de commutation du commutateur,
- Vrec la tension de récupération,
- Udc la tension de la phase d'entrée continue,
- Lrec l'inductance du module récupérateur,
- Req la résistance équivalente ?
- Fsw représente la fréquence de commutation des interrupteurs.

De préférence, un tel module récupérateur d'énergie est monté dans le système de conversion équipé du circuit de modulation, de telle sorte que le module récupérateur d'énergie électrique est disposé entre une phase d'entrée continue du système de conversion et la jonction entre le bras de commutation et le condensateur du circuit de modulation. Pour le mode de réalisation de la figure 5a, le module récupérateur d'énergie électrique peut être connecté de telle sorte que :

- le point du module récupérateur relié à ladite phase d'entrée continue (de tension Udc) du système de conversion correspond au point de la troisième branche du module récupérateur entre l'inductance Lrec et le deuxième condensateur 5 (ce condensateur est la capacité de la batterie), et
- le point du module récupérateur relié à la jonction entre le bras de commutation (de tension Vrec) et le condensateur du circuit de modulation correspond au point de la première branche du module récupérateur entre le commutateur 6 et le premier condensateur 3.

Selon une variante de réalisation de l'invention, le système de conversion peut comporter au moins deux sondes de courant pour mesurer le courant dans deux phases.

Selon une variante de réalisation de l'invention, le système de conversion peut comporter au moins deux sondes de tension isolées pour mesurer les tensions composées entre les phases.

Ces capteurs de courants et de tensions peuvent servir pour le pilotage des bras de commutation.

Le système de conversion selon l'invention permet de piloter des machines électriques, pour tous types d'application, en particulier pour des machines électriques tournant à de très hautes vitesses avec un rendement de l'onduleur (convertisseur) élevé.

Le convertisseur selon l'invention peut être prévu pour une utilisation embarquée, en particulier au sein d'un véhicule, notamment terrestre, aéronautique ou naval.

Le système de conversion selon l'invention peut également être utilisé dans les systèmes non embarqués de production d'énergie électrique, tels que des turbines, des micro-turbines ou des éoliennes.

En outre, la présente invention concerne un système moteur comprenant au moins un moyen de stockage d'énergie électrique, par exemple une batterie, et une machine électrique triphasée, par exemple une machine électrique à aimants permanents. Le système moteur comporte un système de conversion selon un des modes de réalisation

## EP 3 369 166 B1

décrits ci-dessus, pour convertir l'énergie électrique continue dudit moyen de stockage de l'énergie électrique en énergie électrique alternative triphasée pour ladite machine électrique et éventuellement inversement. Ainsi, grâce au système de conversion, la machine électrique peut être pilotée, tout en limitant les pertes électriques. En outre, si le système de conversion est bidirectionnel (réversible), alors il est également possible de stocker (par exemple dans une batterie) une énergie électrique engendrée par la rotation de la machine électrique.

Exemple comparatif :

Un exemple comparatif a été réalisé, de manière à comparer les pertes du système de conversion selon l'invention, avec les pertes des systèmes de conversion DC/AC selon l'art antérieur. Le système selon l'invention testé correspond au mode de réalisation de la figure 5. Les systèmes de conversion DC/AC de l'art antérieur correspondent respectivement à la commutation dure et à la commutation douce, respectivement selon les réalisations des figures 1 et 3.

Pour cet exemple, les valeurs utilisées pour un onduleur d'une puissance nominale de 50 kW, sont les suivantes :

- Ls ~=300 microH,

- Cs ~= 6.8 nanoF,

- Cov ~= 1410 nanoF,

- Vrec ~= 1.5 Vbus,

- Lrec = 56 microH,

- Crec = 20 nanoF,

- type de commutateur : IGBT.

*Tableau 1 - Exemple comparatif*

| | Puissance fournie | Pertes totales | Pertes par dissipation dans le circuit ajouté | Pertes par commutation | Fréquence de commutation |
|---|---|---|---|---|---|
| Art antérieur Hard switching (Figure 1) | 50 kW | 2 kW | 0 kW | 2 kW | 20 khz |
| Art antérieur Soft switching (Figure 3) | 50 kW | 2 kW | 1 kW | 1 kW | 50 khz |
| Invention (Figure 5) | 50 kW | 1.15 kW | 0.15 kW | 1 kW | 50 khz |

On remarque que le système de conversion permet de réduire les pertes totales d'environ 42,5 % par rapport aux systèmes de conversion selon l'art antérieur. Cette réduction est due à une réduction des pertes par commutation liées à la commutation douce (réduction de 50 % des pertes par commutation par rapport à une commutation dure), et par une réduction des pertes par dissipation dans le circuit ajouté (réduction de 85 % des pertes par dissipation par rapport à une commutation douce).

**Revendications**

1. Système de conversion d'une puissance électrique continue en puissance électrique alternative triphasée comprenant trois bras de commutation (A, B, C), un circuit de modulation des variations de tension et d'intensité comprenant un condensateur par phase de sortie alternative dudit système de conversion et une bobine (Ls), **caractérisé en ce que** ledit système de conversion comprend un module récupérateur d'énergie électrique relié auxdits bras de commutation (A, B, C) et audit circuit de modulation, dans lequel ledit module récupérateur d'énergie électrique comporte trois branches reliées en un point de jonction (P), avec :

   une première branche comportant un commutateur (6) et un premier condensateur (3), connectés entre le point de jonction et la masse,

une deuxième branche comportant une diode (4) connectée entre le point de jonction et la masse, et

une troisième branche comportant une Inductance (Lrec), et ledit système de conversion ne comportant pas de résistance, dans laquelle de l'énergie est dissipée,

le module récupérateur d'énergie étant monté dans le système de conversion équipé du circuit de modulation, de telle sorte que le module récupérateur d'énergie électrique est disposé entre une phase d'entrée continue du système de conversion et la jonction entre le bras de commutation (A, B, C) et le condensateur du circuit de modulation.

2. Système selon la revendication 1, dans lequel ledit module récupérateur d'énergie électrique comporte au moins une inductance (Lrec), et au moins un commutateur (6).

3. Système selon l'une des revendications précédentes, dans lequel ledit circuit de modulation comporte une bobine disposée entre une phase d'entrée continue dudit système de conversion et une jonction desdits bras de commutation.

4. Système selon la revendication 3, dans lequel chaque condensateur (Cs) dudit circuit de modulation est relié à une phase de sortie alternative dudit système de conversion et à la jonction entre ladite bobine (Ls) dudit circuit de modulation et lesdits bras de commutation (A, B, C), et un condensateur (Cov).

5. Système selon l'une des revendications précédentes, dans lequel le point du module récupérateur relié à ladite phase d'entrée continue dudit système de conversion est le point de ladite troisième branche dudit module récupérateur entre ladite inductance (Lrec) la masse, et le point du module récupérateur relié à ladite jonction entre ledit bras de commutation (A, B, C) et ledit condensateur dudit circuit de modulation est le point de ladite première branche dudit module récupérateur entre ledit commutateur (6) et ledit premier condensateur (3).

6. Système selon l'une des revendications précédentes, dans lequel chaque bras de commutation comporte deux commutateurs (1) et deux diodes (2), les phases de sortie dudit système de conversion sont reliées au milieu de chaque bras de commutation.

7. Système selon la revendication 6, dans lequel lesdits commutateurs (1) sont des commutateurs MOFSET et/ou IGBT,

8. Système selon l'une des revendications précédentes, dans lequel ledit système de conversion comporte au moins deux sondes de courant.

9. Système selon l'une des revendications précédentes, dans lequel ledit système de conversion comporte au moins deux sondes de tension.

10. Système selon l'une des revendications précédentes, dans lequel ledit système de conversion est bidirectionnel.

11. Système moteur comprenant au moins un moyen de stockage d'énergie électrique et une machine électrique triphasée (M), **caractérisé en ce que** le système moteur comporte un système de conversion selon l'une des revendications précédentes, pour convertir l'énergie électrique continue dudit moyen de stockage de l'énergie électrique en énergie électrique alternative triphasée pour ladite machine électrique.

**Patentansprüche**

1. System zum Umwandeln einer elektrischen Gleichstromleistung in eine dreiphasige elektrische Wechselstromleistung, umfassend drei Schaltarme (A, B, C), eine Spannungs- und Stromänderungsmodulationsschaltung, umfassend einen Kondensator pro Ausgangsphasenalternative des Umwandlungssystems und eine Spule (Ls), **dadurch gekennzeichnet, dass** das Umwandlungssystem ein elektrisches Energierückgewinnungsmodul umfasst, das mit den Schaltarmen (A, B, C) und der Modulationsschaltung verbunden ist, wobei das elektrische Energierückgewinnungsmodul drei an einem Verbindungspunkt (P) verbundene Zweige umfasst, mit:

- einen ersten Zweig, der einen Schalter (6) und einen ersten Kondensator (3) umfasst, die zwischen dem Verbindungspunkt und der Erde verbunden sind,
- einen zweiten Zweig mit einer Diode (4), die zwischen dem Verbindungspunkt und der Erde geschaltet ist, und

- ein dritter Zweig, der eine Induktivität (Lrec) umfasst, und das Umwandlungssystem keinen Widerstand implizieren, in dem Energie abgeführt wird;

das Energierückgewinnungsmodul wird in dem mit einer Modulationsschaltung ausgestatteten Umwandlungssystem zusammengebaut, so dass das elektrische Energierückgewinnungsmodul zwischen einer kontinuierlichen Eingangsphase des Umwandlungssystems und der Verbindungsstelle zwischen dem Schaltann (A, B, C) und dem angeordnet ist Kondensator der Modulationsschaltung.

2. System nach Anspruch 1, wobei das elektrische Energierückgewinnungsmodul mindestens einen Induktor (Lrec) und mindestens einen Schalter (6) umfasst.

3. System nach einem der vorhergehenden Ansprüche, bei dem die Modulationsschaltung eine Spule umfasst, die zwischen einer kontinuierlichen Eingangsphase des Umwandlungssystems und einem Übergang der Schaltarme angeordnet ist.

4. System nach Anspruch 3, wobei jeder Kondensator (Cs) der Modulationsschaltung mit einer Wechselstromausgangsphase des Umwandlungssystems und mit dem Übergang zwischen der Spule (Ls) der Modulationsschaltung und den Schaltarmen (A,) verbunden ist. B, C) und einen Kondensator (Cov).

5. System nach einem der vorhergehenden Ansprüche, wobei der Punkt des Rekuperatormoduls, der mit der kontinuierlichen Eingangsphase des Umwandlungssystems verbunden ist, der Punkt des dritten Zweigs des Rekuperatormoduls zwischen der Induktivität (Lrec) der Masse und dem ist Der Punkt des Rekuperatormoduls, der mit dem Übergang zwischen dem Schaltarm (A, B, C) und dem Kondensator der Modulationsschaltung verbunden ist, ist der Punkt des ersten Zweigs des Rekuperatormoduls zwischen dem Schalter (6) und dem ersten Kondensator (3).

6. System nach einem der vorhergehenden Ansprüche, bei dem jeder Schaltarm zwei Schalter (1) und zwei Dioden (2) umfasst, sind die Ausgangsphasen des Umwandlungssystems mit der Mitte jedes Schaltarms verbunden.

7. System nach Anspruch 6, wobei die Schalter (1) MOFSET- und/oder IGBT-Schalter sind.

8. System nach einem der vorhergehenden Ansprüche, wobei das Umwandlungssystem mindestens zwei Stromsonden umfasst.

9. System nach einem der vorhergehenden Ansprüche, wobei das Umwandlungssystem mindestens zwei Spannungssonden umfasst.

10. System nach einem der vorhergehenden Ansprüche, wobei das Umwandlungssystem bidirektional ist.

11. Motorsystem mit mindestens einem elektrischen Energiespeichermittel und einer dreiphasigen elektrischen Maschine (M), **dadurch gekennzeichnet, dass** das Motorsystem ein Umwandlungssystem nach einem der vorhergehenden Ansprüche zum Umwandeln von kontinuierlicher elektrischer Energie aus dem Mittel für umfasst Speichern elektrischer Energie in dreiphasiger alternierender elektrischer Energie für die elektrische Maschine.

**Claims**

1. System for converting a DC electrical power into three-phase AC electrical power comprising three switching arms (A, B, C), a voltage and current variation modulation circuit comprising one capacitor per output phase alternative of said conversion system and a coil (Ls), **characterized in that** said conversion system comprises an electrical energy recovery module connected to said switching arms (A, B, C) and to said modulation circuit, in which said electrical energy recovery module comprises three branches connected at a junction point (P), with:

- a first branch comprising a switch (6) and a first capacitor (3) connected between the junction point and the ground,
- a second branch comprising a diode (4) connected between the junction point and the ground, and
- a third branch comprising an inductance (Lrec), and said conversion system do not implying any resistance, in which energy is dissipated,
the energy recovery module being assembled inside the converting system equipped with a modulation circuit, so that the electric energy recovery module is disposed between a continuous input phase of the conversion system and the junction between the switching arm (A, B, C) and the capacitor of the modulation circuit.

2. System according to claim 1, wherein said electrical energy recovery module comprises at least one inductor (Lrec), and at least one switch (6).

3. System according to one of the preceding claims, in which said modulation circuit comprises a coil disposed between a continuous input phase of said conversion system and a junction of said switching arms.

4. System according to claim 3, wherein each capacitor (Cs) of said modulation circuit is connected to an AC output phase of said conversion system and to the junction between said coil (Ls) of said modulation circuit and said switching arms (A, B, C), and a capacitor (Cov).

5. System according to one of the previous claims, wherein the point of the recuperator module connected to said continuous input phase of said conversion system is the point of said third branch of said recuperator module between said inductance (Lrec) the mass, and the point of the recuperator module connected to said junction between said switching arm (A, B, C) and said capacitor of said modulation circuit is the point of said first branch of said recuperator module between said switch (6) and said first capacitor (3).

6. System according to one of the preceding claims, in which each switching arm comprises two switches (1) and two diodes (2), the output phases of said conversion system are connected to the middle of each switching arm.

7. System according to claim 6, wherein said switches (1) are MOFSET and/or IGBT switches.

8. System according to one of the preceding claims, wherein said conversion system comprises at least two current probes.

9. System according to one of the preceding claims, wherein said conversion system comprises at least two voltage probes.

10. System according to one of the preceding claims, wherein said conversion system is bidirectional.

11. Motor system comprising at least one electrical energy storage means and a three-phase electrical machine (M), **characterized in that** the motor system comprises a conversion system according to one of the preceding claims, for converting continuous electrical energy from said means for storing electrical energy in three-phase alternating electrical energy for said electrical machine.

Figure 1

Figure 2

Figure 3

Figure 4

Figure 5a

Figure 5b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 11016854 A

**Littérature non-brevet citée dans la description**

- Regenerative Undeland Snubber Using a ZVS PWM DC DC Auxiliary Converter Applied to Three-Phase Voltage-Fed Inverter. IEEE TRANSACTIONS ON INDUSTRIAL ELECTRONICS. IEEE SERVICE CENTER, 01 Août 2011, vol. 58, 3298-3307

- *Advanced inverter drives for traction,* 01 Janvier 1993, 224-228